Europäisches Patentamt

European Patent Office

Office européen des brevets

(11) Publication number : **0 501 729 A1**

# (12) EUROPEAN PATENT APPLICATION

(21) Application number : 92301536.6

(22) Date of filing : 24.02.92

(51) Int. Cl.⁵ : **C03B 9/31,** C03B 19/06, C03B 37/15, C04B 35/64, // C04B35/80, C03C10/00, C03C14/00, C03B11/14

(30) Priority : 28.02.91 GB 9104227

(43) Date of publication of application :
02.09.92 Bulletin 92/36

(84) Designated Contracting States :
DE FR GB IT

(71) Applicant : **BRITISH AEROSPACE PUBLIC LIMITED COMPANY**
**11 Strand**
**London WC2N 5JT (GB)**

(72) Inventor : **McPaul, Terence P., British Aerospace Systems and Equipment Limited, P.O. Box 55, Gunnels Wood Road Stevenage, Herts SG1 2DB (GB)**

(74) Representative : **Rooney, Paul Blaise et al British Aerospace plc, Corporate Intellectual Property Department, Park East, PO Box 87, Farnborough Aerospace Centre Farnborough, Hants GU14 6YU (GB)**

(54) Method of producing a glass ceramic component.

(57)   A glass ceramic component is produced by making a mould (12) of the required shape for the component required, laying-up a preform (10), in the form of a woven cloth over the mould (12), using a hot-isostatic pressing process to form a glass component from the preform (10), and heating the glass component to crystallisation temperature to form a glass ceramic component.

*Fig.1.*

This invention relates to a method of producing a glass ceramic component, including reinforced glass ceramics.

A reinforced thermoplastic component may be made in numerous different ways. For example, a prepreg of glass fibre may be laid-up onto a mould. The resultant preform is then hot pressed in order to fix the component.

This technique provides components that work up to a temperature of about 400°C. However at higher temperatures the components break down and the performance decreases. Possible components that work at higher temperatures include the class of components known as Glass Ceramics.

Glass ceramic components may be fabricated by introducing molten glass into a spinning mould. Centrifugal forces cause the glass to creep up the sides of the mould thereby forming a component in the shape of mould. The glass is then allowed to cool before it is further heated to crystallise it into a glass ceramic. This method is capable of producing fairly complex shape components.

The main problem with this method is that it does not offer a means of producing a reinforced glass ceramic component.

Reinforced glass ceramics may be produced by passing reinforcing fibres through a glass ceramic in, for example, powder form. The fibres are then laid-up and hot pressed.

This produces high performance composite components, that are generally flat or only slightly curved. More complex shapes can not be fabricated using this method.

According to one aspect of the present invention, there is provided a method of producing a glass ceramic component characterised by the steps of:-

making a mould of the required shape for the component required,

laying-up a preform, in the form of a woven cloth over the mould;

using a hot-isostatic pressing process to form a glass component from the preform; and

heating the glass component to crystallis ation temperature to form a glass ceramic component.

For a better understanding of the present invention, and to show how the same may be carried into effect, reference will now be made, by way of example to the accompanying drawings, in which:-

Figure 1 is a cross-sectional view of apparatus tus for making a reinforced glass ceramic component according to a method of a first embodiment of the invention;

Figure 2 is a diagram of a first cloth for use in the method and apparatus of Figure 1; and

Figure 3 is a diagram of a second cloth for use in the method and apparatus of Figure 1.

Figure 4a represents the manner in which the glass ceramic fibre is portrayed in Figures 2 and 3, and

Figure 4b represents the manner in which the reinforcing fibre is portrayed in Figures 2 and 3.

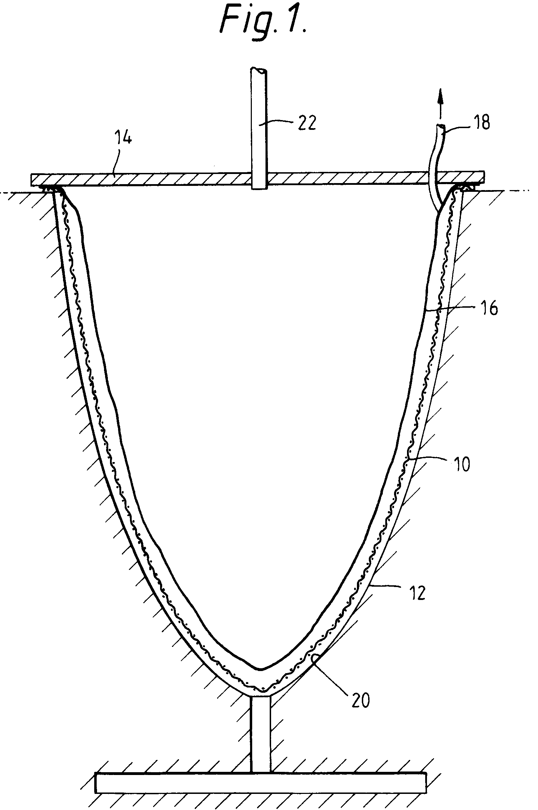

Referring to Figure 1 of the accompanying drawings a preform 10 is shown laid-up in a mould 12. The mould can be sealed, in use, by a lid 14. A bag 16 is located between the preform 10 and the lid 14 of the mould. The bag 16 has an integral pipe 18 which passes through the lid 14 and is connected to a vacuum pump (not shown). In use the vacuum pump removes the air between the preform and an internal surface 20 of the mould and between the preform and the bag itself. A second pipe 2 2 is located in the lid 14 and is the means through which pressure may be applied when the component is formed from the preform.

The preform 10 comprises a cloth woven from one or more different types of fibre. The fibres may include any combination of glass fibres and may include reinforcing fibres where necessary. By way of example the glass fibre may be formed from borosilicate glass, cordierite glass ceramic or osumilite glass ceramic. In the production of reinforced components, silicon carbide fibres, for example, may be used as the reinforcing fibre.

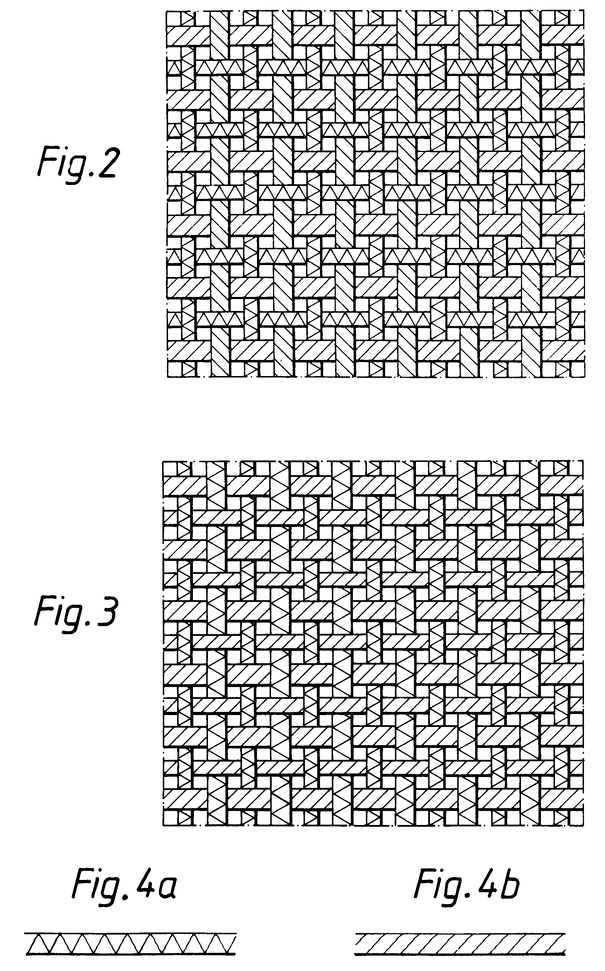

Figures 2 and 3 of the drawings show two different types of cloth for fabricating a reinforced component. Figure 2 shows a plain weave cloth where the glass fibre and reinforcer fibre are woven in both warp and weft to give a final component which is reinforced in all directions. Figure 3 shows the plain weave of a cloth in which the warp is a glass fibre and the weft a reinforcing fibre. This provides a final compound that has uni-directional strength. Figure 4a shows how the glass ceramic fibre is shown in Figures 2 and 3 and Figure 4b shows how the reinforcing fibre is shown in Figures 2 and 3.

The cloth need not be a plain weave, but may be woven in any known manner, for example a twill weave, satin weave etc.

Referring again to Figure 1, the cloth preform is laid up against the internal surface 20 of the mould. The vacuum bag 16 is then laid over the cloth and the mould sealed. The air is removed from around the cloth by the vacuum pump attached to pipe 18. The preform is then subjected to a Hot isostatic pressing (HIP) process. This forms a reinforced glass component. The component is further heat treated in order that the glass crystallises and a reinforced glass ceramic component is produced. The temperature and pressure ranges for the HIPPING process are compound dependant and are, for example, respectively a temperature in the ran of from 1000 to 1500°C and a pressure in the range of from 200 to 500 pounds per square inch (p.s.i.).

It should be noted that any weave of cloth may be used and is not limited to the illustrated examples.

It should be further noted that any shaped component may be fabricated by using a suitable mould in the fabrication process.

**Claims**

1. A method of producing a glass ceramic component characterised by the steps of:-

    making a mould (12) of the required shape for the component required,

    laying-up a preform (10), in the form of a woven cloth over the mould (12),

    using a hot-isostatic pressing process to form a glass component from the preform (10, and

    heating the glass component to crystallisation temperature to form a glass ceramic component.

2. A method according to claim 1, including the step of weaving the cloth from glass fibre.

3. A method according to claim 1, including the step of weaving the cloth from glass fibre and reinforcing fibre.

4. A method according to claim 1 or claim 3, using silicon carbide fibres as the reinforcing fibres.

5. A method according to any one of claim 1 to 4, using borosilicate glass fibres as the glass fibre.

6. A method according to any one of claim 1 to 4, using cordierite glass fibres as the glass fibre.

7. A method according to any one of claims 1 to 4, using osumilite glass fibres as the glass fibre.

8. A woven cloth for use in the method according to any one of the preceding claims, in which the cloth is woven according to the requiments of the component in any known manner.

9. A glass ceramic Radome as fabricated by the method according to any one of claims 1 to 7.

# Fig.1.

Fig.2

Fig.3

Fig.4a

Fig.4b

**European Patent Office**

**EUROPEAN SEARCH REPORT**

Application Number

EP 92 30 1536

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 426 352 (CORNING INC.)<br>* claims 1,4-8; column 1, lines 4-8; column 2, lines 21-30; column 4, line 52 to column 5, line 8; column 5, lines 29-32; column 5, line 48 to column 6, line 31 *<br>--- | 1,4,8 | C 03 B 9/31<br>C 03 B 19/06<br>C 03 B 37/15<br>C 04 B 35/64 //<br>C 04 B 35/80<br>C 03 C 10/00<br>C 03 C 14/00<br>C 03 B 11/14 |
| X | EP-A-0 317 129 (CORNING GLASS WORKS)<br>* claims 1,5,6,9,12,13; page 3, lines 30-35; page 6, lines 14-22; page 8, lines 1-3,10-13 *<br>--- | 1,2,4,8 | |
| Y | WO-A-8 504 835 (UNITED TECHNOLOGIES CORP.) | 1-6 | |
| X | * claims 1-4; page 5, lines 11-23; page 10, lines 7-22 *<br>--- | 8 | |
| Y | PATENT ABSTRACTS OF JAPAN vol. 013, no. 273 (C-609)22 June 1989<br>& JP-A-01 069 583 ( KOBE STEEL LTD. ) 15 March 1989<br>--- | 1-6 | |
| X | FR-A-2 624 504 (UNITED TECHNOLOGIES CORP.)<br>* claims 1-4; page 9, lines 23-27; page 12, lines 7-10 *<br>--- | 1,4 | **TECHNICAL FIELDS SEARCHED (Int. Cl.5)**<br><br>C 03 B<br>C 04 B<br>C 03 C |
| X | EP-A-0 290 146 (CORNING GLASS WORKS)<br>* claims 1,2; page 3, lines 43-45,54-57; page 4, lines 4-10; page 5, lines 32-37 *<br>--- | 1,4,8 | |
| A | US-A-4 412 854 (G.K.LAYDEN)<br>* claims 1,3; column 3, lines 3-50 *<br>---                              -/- | 1,4 | |

The present search report has been drawn up for all claims

| Place of search | Date of completion of the search | Examiner |
|---|---|---|
| THE HAGUE | 13-05-1992 | STROUD J.G. |

EPO FORM 1503 03.82 (P0401)

**European Patent Office**

# EUROPEAN SEARCH REPORT

Application Number

EP 92 30 1536

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 291 905 (CORNING GLASS WORKS)<br>* claims 1,2,8,12; column 5, lines 4-25 * | 1,4,6 | |
| A | EP-A-0 126 017 (UNITED TECHNOLOGIES CORP.)<br>* claims 1,4; page 3, lines 27-31; page 16, line 30 to page 17, line 9 * | 1,4 | |
| X | AMERICAN CERAMIC SOCIETY BULLETIN. vol. 68, no. 2, February 1989, COLUMBUS US pages 401 - 414; F.K.KO: 'Preform Fiber Architecture for Ceramic-Matrix Composites'<br>* the whole document * | 8 | |
| X | FR-A-2 354 979 (SULZER FRERES SA) | 8 | |
| X<br>A | US-A-4 268 562 (J.F.BACON ET AL.)<br>* column 3, lines 17-60 * | 9<br>1 | |
| P,X | EP-A-0 458 729 (UNITED TECHNOLOGIES CORP.)<br>* claims 1-4,9; column 4, lines 7-10; column 5, lines 14-53 * | 1-4,8 | TECHNICAL FIELDS SEARCHED (Int. Cl.5) |
| P,X | EP-A-0 431 301 (CORNING INC.)<br>* claims 1,2,8,9; page 3, lines 9-12; page 4, lines 41-48; page 5, lines 18-20,50-54 * | 1 | |
| P,X | GB-A-2 239 214 (ROLLS-ROYCE PLC)<br>* claims 1,10-14,20,22 * | 1,4,8 | |

The present search report has been drawn up for all claims

| Place of search | Date of completion of the search | Examiner |
|---|---|---|
| THE HAGUE | 13-05-1992 | STROUD J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)